# EUROPEAN PATENT SPECIFICATION

(11) **EP 3 279 878 B1**
(45) Date of publication and mention of the grant of the patent: **02.09.2020**
(21) Application number: 16771717.2
(22) Date of filing: 22.03.2016
(51) Int. Cl.: G08B 13/196, H04N 7/18, G06K 9/46, H04W 4/02, G06K 9/00

(54) **MONITORING SYSTEM, CONTROL METHOD, AND RECORDING MEDIUM**
ÜBERWACHUNGSSYSTEM, STEUERUNGSVERFAHREN UND AUFZEICHNUNGSMEDIUM
SYSTÈME DE SURVEILLANCE, PROCÉDÉ DE COMMANDE ET SUPPORT D'ENREGISTREMENT

(30) Priority: 30.03.2015 JP 2015068507
(43) Date of publication of application: 07.02.2018
(73) Proprietor: NEC Corporation, Tokyo 108-8001 (JP)
(72) Inventor: ARAI, Ikuko, Tokyo 108-8001 (JP); AOYAMA, Akio, Tokyo 108-8001 (JP)
(74) Representative: MacDougall, Alan John Shaw
(86) International application number: PCT/JP2016/001639
(87) International publication number: WO 2016/157825

(56) References cited:
- JP-A- 2008 048 078
- JP-A- 2008 067 291
- JP-A- 2011 145 839
- JP-A- 2013 088 870
- US-A1- 2010 166 324
- US-A1- 2013 142 384
- US-A1- 2013 150 004

## Description

### [Technical Field]

The present invention relates to a monitoring system, a control method, and a recording medium.

### [Background Art]

Recent years, installation of cameras for monitoring trash boxes, lockers, vending machines, toilets, and similar facility that are placed in a public space has increased for prevention of crimes. When such monitoring cameras continue image-capturing constantly, however, it may cause increase of the amount of captured data, and thus, management and/or analysis of captured data to be difficult.

PTL 1 discloses a technology for detecting changes of a state inside a trash box by a sensor installed for detecting an object inside the trash box, under the lid of the trash box. When a change in the state occurs inside the trash box that is in an unavailable condition, the technology described in PTL 1 determines that a suspicious object is dumped into the trash box.

PTL 2 discloses a trash box that is equipped with a sensor for determining whether or not trash having been dumped into the trash box is trash of a prescribed type (material). When trash of a type other than the prescribed type is dumped into the trash box, the technology described in PTL 2 issues a warning and, when the warning is not followed, captures the face of a person who has dumped the trash.

PTL 3 discloses a technology in which a weight of trash inside a trash box is measured and, in conjunction therewith, a neighborhood of the trash box is captured.

US 2013/142384 discloses that sensory data acquired by a portable computing device that users carry with them can be combined with data acquired by existing infrastructure to determine the location of individual users.

US 2010/166324 A1 discloses a video analysis system which detects a transaction outcome by obtaining video data associated with a transaction area and analyzing the video data to get video transaction parameters concerning transactions associated with the transaction area.

US 2013/150004 A1 discloses a detection system including at least one processor and a plurality of sensors that are operative to be used by the at least one processor to determine which individuals in a group of individuals are and/or not transmitting a predetermined type of radio frequency signals.

### [Citation List]

### [Patent Literature]

[PTL 1] JP 2009-249118 A
[PTL 2] JP 2008-168951 A
[PTL 3] JP 2004-001991 A

### [Technical Problem]

The following analysis is made from the viewpoint of the present invention.

As described above, it is preferable that, when detecting a prescribed event (the above-described important event), a monitoring camera captures a scene in which the event has occurred. Furthermore, it is preferable that a person who is a likely cause of the occurrence of the event be identified. For example, when monitoring a trash box, it is preferable to identify a person who dumps trash.

The technology described in PTL 1 does not enable to identify a person dumping a suspicious object. The technologies described in PTLs 2 and 3, although capturing a person dumping trash, does not enable to identify the person. To identify a person dumping trash by use of the technologies described in PTLs 2 and 3, processing for, for example, registering face images in a database in advance and the similar processing is required to be performed. However, when a trash box placed in a public space is monitored, an unspecified number of users are expected to approach the trash box. For this reason, when a trash box placed in a public space is to be monitored, it is difficult to register the face images of such users into a database.

Furthermore, the technologies described in PTLs 1 to 3 are technologies specialized in trash boxes. For this reason, the technologies described in PTLs 1 to 3 cannot be applied to a device and facility other than a trash box (for example, a locker, a vending machine, a toilet, and the similar facility).

### [Summary of Invention]

The present invention provides a monitoring system, a method for controlling a monitoring system, and a program, as disclosed in the appended independent claims. Optional, but advantageous features are disclosed in the appended dependent claims.

In first aspect of the invention, a monitoring system is provided. The monitoring system includes a monitored device and a management device that communicates with the monitored device. The monitored device includes a signal receiving means for receiving a signal including identification information for identifying a terminal from the terminal existing within a prescribed range from the monitored device as a received signal; a terminal distance estimation means for, based on the received signal, estimating a distance from the monitored device to the terminal as terminal distance information; a terminal direction estimation means for, based on the received signal, estimating a direction directed from the monitored device to the terminal as terminal direction information; and a video capturing means for capturing a prescribed image-capturing range that is a neighborhood of the monitored device. The monitoring system is characterized in that the management device includes a data analysis means for analyzing a captured video that the video capturing means has captured to determine a person who is likely a cause of the occurrence of a prescribed event among users of monitored devices which were attached to the management device when the prescribed event occurred.

Also disclosed is a monitored device. The monitored device includes a signal receiving means for receiving a signal including identification information for identifying a terminal from the terminal existing in a prescribed range as a received signal; a terminal distance estimation means for, based on the received signal, estimating a distance from the monitored device itself to the terminal as terminal distance information; a terminal direction estimation means for, based on the received signal, estimating a direction directed from the monitored device itself to the terminal as terminal direction information; a video capturing means for capturing a prescribed image-capturing range that is a neighborhood of the monitored device itself; and a data analysis means for, based on determination of whether or not a prescribed event has occurred, identifying the terminal distance information, the terminal direction information, and the identification information that are related to a capturing time of a captured video.

In second aspect of the invention, a method for controlling a monitoring system including at least one monitored device and a management device, the at least one monitored device communicable with a terminal is provided. The method includes receiving a signal including identification information for identifying the terminal from the terminal existing within a prescribed range from the monitored device as a received signal; based on the received signal, estimating a distance from the at least one monitored device to the terminal as terminal distance information; based on the received signal, estimating a direction directed from the at least one monitored device to the terminal as terminal direction information; and capturing a prescribed image-capturing range that is a neighborhood of the at least one monitored device; characterized in that the method further comprises: analyzing a captured video that has been captured to determine a person who is likely a cause of the occurrence of a prescribed event among users of the at least one monitored device which were attached to the management device when the prescribed event occurred.

Also disclosed is a control method of a monitored device. The control method includes receiving a signal including identification information for identifying a terminal from the terminal existing within a prescribed range as a received signal; based on the received signal, estimating a distance from the monitored device to the terminal as terminal distance information; based on the received signal, estimating a direction directed from the monitored device to the terminal as terminal direction information; capturing a prescribed image-capturing range that is a neighborhood of the monitored device; and based on determination of whether or not a prescribed event has occurred, identifying the terminal distance information, the terminal direction information, and the identification information that are related to a capturing time of a captured video.

In third aspect of the invention, a program is provided. The program makes a computer execute: processing for receiving a signal including identification information for identifying a terminal from the terminal existing within a prescribed range as a received signal; processing for, based on the received signal, estimating a distance from at least one monitored device to the terminal as terminal distance information; processing for, based on the received signal, estimating a direction directed from the at least one monitored device to the terminal as terminal direction information; processing for capturing a prescribed image-capturing range that is a neighborhood of the at least one monitored device. and the program is characterized in that the program makes the computer further execute: processing for analyzing a captured video that has been captured to determine a person who is likely a cause of the occurrence of a prescribed event among users of the at least one monitored device which were attached to a management device when the prescribed event occurred.

### [Advantageous Effects of Invention]

According to the respective aspects of the present invention, a monitoring system, a monitored device, a control method, and a recording medium may be provided that, when a prescribed event has occurred to a device, a facility, and the like, contribute to easily identifying a person who is a likely cause of the occurrence of the event.

### [Brief Description of Drawings]

[Fig. 1] Fig. 1 is a diagram for a description of an outline of an example embodiment;
[Fig. 2] Fig. 2 is a block diagram illustrating an example of an overall configuration of a monitoring system according to a first example embodiment;
[Fig. 3] Fig. 3 is a flowchart illustrating an example of an operation of a monitored device and an example of an operation of a management unit;
[Fig. 4] Fig. 4 is a diagram illustrating an example of an analysis result of video information;
[Fig. 5] Fig. 5 is a block diagram illustrating an example of an overall configuration of a monitoring system according to a second example embodiment; and
[Fig. 6] Fig. 6 is a flowchart illustrating an example of an operation of a monitored device and an example of an operation of a management unit.

### [Description of Embodiments]

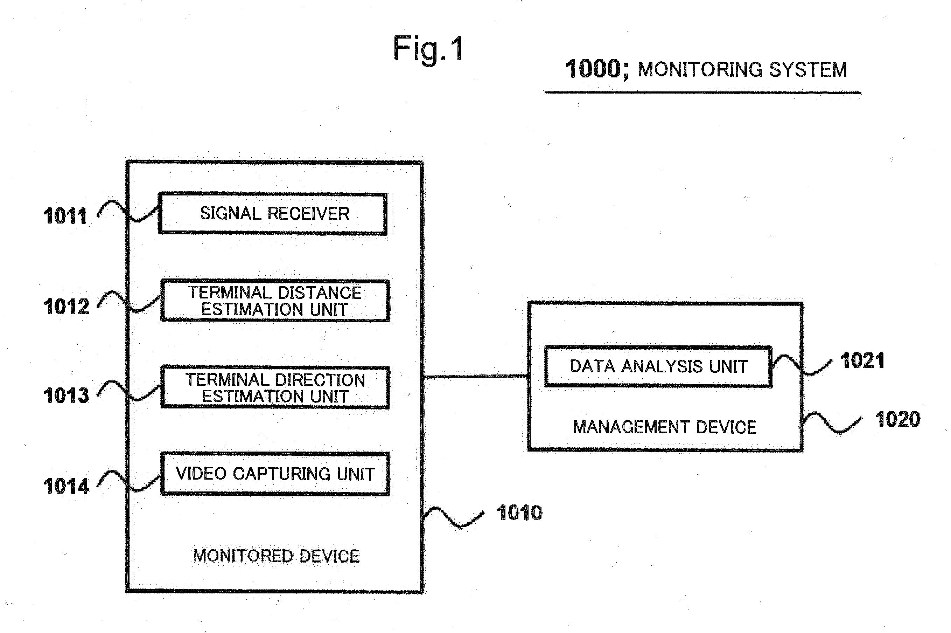

First, an outline of an example embodiment will be described using Fig. 1. Drawing reference symbols appended in this outline are appended to respective constituent elements for convenience as an example to facilitate understanding, and the description in the outline is not intended to suggest any limitation.

As described above, a monitoring system is desired that, when a prescribed event has occurred to a device, a facility, and the like, contributes to easily identifying a person who is a likely cause of the occurrence of the event.

Accordingly, a monitoring system 1000 illustrated in Fig. 1 is provided as an example. The monitoring system 1000 includes a monitored device 1010 and a management device 1020 that communicates with the monitored device 1010. The monitored device 1010 includes a signal receiver 1011, a terminal distance estimation unit 1012, a terminal direction estimation unit 1013, and a video capturing unit 1014. The management device 1020 includes a data analysis unit 1021.

The signal receiver 1011 receives a signal from a terminal as a received signal that includes identification information for identifying the terminal existing within a prescribed range from the monitored device 1010.

The terminal distance estimation unit 1012 estimates a distance from the monitored device 1010 to the terminal as terminal distance information based on the received signal.

The terminal direction estimation unit 1013 estimates a direction directed from the monitored device 1010 to the terminal as terminal direction information based on the received signal.

The video capturing unit 1014 captures a video in a prescribed image-capturing range that is a neighborhood of the monitored device 1010.

The data analysis unit 1021 analyzes a captured video that the video capturing unit 1014 has captured and determines whether or not a prescribed event has occurred. Furthermore, the data analysis unit 1021 identifies the terminal distance information, the terminal direction information, and the identification information, which are related to a capturing time of the captured video.

As described above, when a terminal is detected in a neighborhood of the monitored device 1010, the monitoring system 1000 is capable of capturing a video at the moment of occurrence of a prescribed event and, in conjunction therewith, identifying a terminal existing in the neighborhood of the monitored device 1010 at the moment of occurrence of the event. Furthermore, the monitoring system 1000 acquires the identification information of a terminal existing in the neighborhood of the monitored device 1010. As a result, when the prescribed event has occurred to a device, a facility, and the similar facility, the monitoring system 1000 contributes to easily identifying a person who is a likely cause of an occurrence of the event.

### [First Example Embodiment]

A first example embodiment will be described in more detail using the drawings. A radio base station that will be described below is assumed to be configured including functions equivalent to the above-described signal receiver 1010.

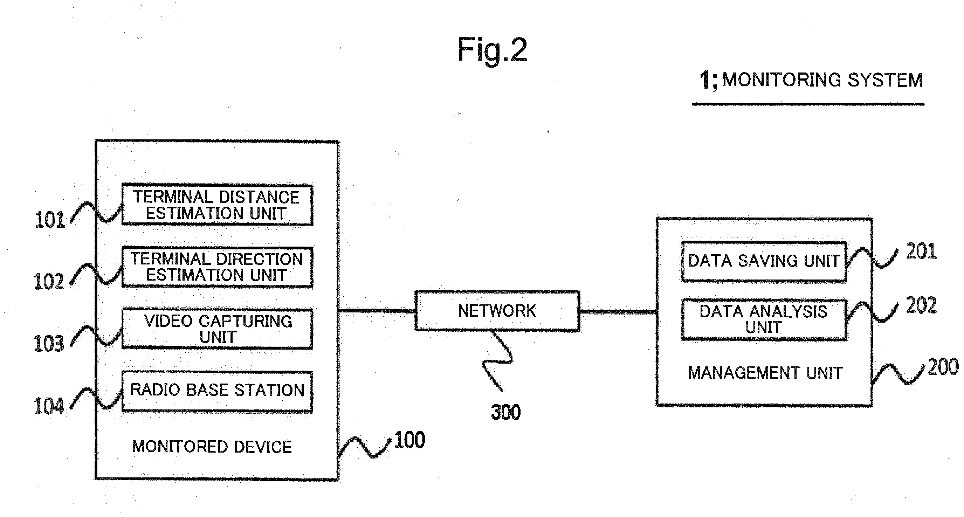

Fig. 2 is a block diagram illustrating an example of an overall configuration of a monitoring system 1 according to the present example embodiment.

The monitoring system 1 is configured including a monitored device 100 and a management unit (management device) 200. Fig. 2 illustrates an example of the overall configuration of the monitoring system 1 according to the present example embodiment and is not intended to limit the configuration of the monitoring system 1 according to the present example embodiment to the configuration illustrated in Fig. 2. For example, the management unit (management device) 200 may be arranged inside the monitored device 100. Alternatively, the management unit (management device) 200 may exist at a location distant from the monitored device 100 and, as illustrated in Fig. 2, the monitored device 100 and the management unit 200 may be interconnected via a network 300.

First, the monitored device 100 will be described in detail.

The monitored device 100 is a device, equipment, or the like that is to be monitored. For example, the monitored device 100 may be a trash box, a locker, a toilet, a vending machine, or the similar facility. The form of the monitored device 100 is not limited to a specific one as long as the monitored device 100 includes functions described herein. The following description will be made assuming that a trash box is equipped with the monitored device 100. In addition, in the following description, the user of a trash box that is equipped with the monitored device 100 is referred to as a user of the monitored device 100.

Hereinafter, an internal configuration of the monitored device 100 will be described in detail.

The monitored device 100 is configured including a terminal distance estimation unit 101, a terminal direction estimation unit 102, a video capturing unit 103, and a radio base station 104.

The terminal distance estimation unit 101 estimates a distance between each terminal attaching to the radio base station 104 and the monitored device 100 including the terminal distance estimation unit 101. Although methods for the terminal distance estimation unit 101 estimating a distance to each terminal described above include various methods, a method to be employed is not limited to a specific one. In the following description, a distance from the radio base station 104 to a terminal, which the terminal distance estimation unit 101 estimates, is referred to as terminal distance information.

For example, when the radio base station 104 uses a Massive MIMO (Multiple Input Multiple Output) antenna, the terminal distance estimation unit 101 may, based on reception intensity and the like of a signal transmitted from a terminal to the Massive MIMO antenna, estimate a distance (that is, terminal distance information) between the terminal and the monitored device 100.

Specifically, the terminal distance estimation unit 101 accepts information of reception intensity of a signal transmitted from each terminal attaching to the radio base station 104 to the Massive MIMO antenna from the radio base station 104. Based on the accepted information, the terminal distance estimation unit 101 may estimate a distance (that is, terminal distance information) from the monitored device 100 to each terminal.

Furthermore, when the radio base station 104 receives a signal from a terminal, the received signal preferably includes information for identifying a user of the terminal. Hereinafter, the information for identifying a user of a terminal is referred to as user identification information. For example, the user identification information may be a subscriber ID (Identification) that is assigned to each user of the terminal by a telecommunications carrier that manages the terminal.

In addition, the radio base station 104 preferably store information (hereinafter, referred to as time information) relating to time at which a signal from a terminal is received.

The terminal distance estimation unit 101 transmits estimated terminal distance information, user identification information included in a signal that the radio base station 104 has received, and time information stored in the radio base station 104 to a data saving unit 201 via the network 300.

Alternatively, a signal that the radio base station 104 receives from each terminal may include information (hereinafter, referred to as terminal identification information) for identifying the terminal. In this case, the terminal distance estimation unit 101 may transmit estimated terminal distance information, terminal identification information included in a signal that the radio base station 104 has received, and time information stored in the radio base station 104 to the data saving unit 201 via the network 300.

The terminal direction estimation unit 102 estimates a direction from the monitored device 100 having the radio base station 104 built-in with respect to each terminal attaching to the radio base station 104. Although methods for the terminal direction estimation unit 102 estimating a direction directed to a terminal includes various methods, a method to be employed is not limited to a specific one. In the following description, a direction directed from the monitored device 100 to a terminal, which the terminal direction estimation unit 102 estimates, is referred to as terminal direction information.

For example, when the radio base station 104 uses the Massive MIMO antenna, the terminal direction estimation unit 102 may, based on reception intensity and the like of a signal transmitted from a terminal to the Massive MIMO antenna, estimate a direction (that is, terminal direction information) directed from the monitored device 100 to the terminal.

Specifically, the terminal direction estimation unit 102 accepts information of reception intensity of a signal transmitted from each terminal attaching to the radio base station 104 to the Massive MIMO antenna from the radio base station 104. Based on the accepted information, the terminal direction estimation unit 102 may estimate a direction (that is, terminal direction information) directed from each terminal to the monitored device 100.

As described above, when the radio base station 104 receives a signal, the received signal preferably includes user identification information of the terminal.

The terminal direction estimation unit 102 transmits estimated terminal direction information, user identification information included in a signal that the radio base station 104 has received, and time information stored in the radio base station 104 based thereon to the data saving unit 201 via the network 300.

In addition, as described above, a signal that the radio base station 104 receives from a terminal may include terminal identification information. In this case, the terminal direction estimation unit 102 may transmit estimated terminal direction information, terminal identification information included in a signal that the radio base station 104 has received, and time information stored in the radio base station 104 to the data saving unit 201 via the network 300.

The video capturing unit 103 is installed so that the monitored device 100 and a user of the monitored device 100 are imaged. The video capturing unit 103 captures a video. In the above, the video capturing unit 103 stores a video captured thereby and information (hereinafter, referred to as capturing time information) relating to capturing time of the video in association with each other. In the following description, a video that the video capturing unit 103 captures is referred to as a captured video. In addition, in the following description, information combining a captured video and capturing time information thereof is also referred to as video information.

The video capturing unit 103 transmits a captured video and capturing time information thereof to the data saving unit 201 via the network 300. In the above, the video capturing unit 103 preferably transmits a captured video and capturing time information thereof to the data saving unit 201 in real time (that is, within a time period not longer than a prescribed threshold value after acquisition of video information).

Next, the management unit 200 will be described in detail. In the following description, user identification information and terminal identification information are referred to as identification information.

The management unit 200 is configured including the data saving unit 201 and a data analysis unit 202.

The data saving unit 201 receives terminal distance information, terminal direction information, identification information, and time information from the monitored device 100. The data saving unit 201 also receives a captured video and capturing time information thereof from the monitored device 100. The data saving unit 201 saves the received information. The data saving unit 201 receives and saves an analysis result of a person who is a likely cause of an occurrence of an event from the data analysis unit 202. The analysis of a person who is a likely cause of an occurrence of an event will be described later.

The data analysis unit 202 acquires, from the data saving unit 201, information that the data saving unit 201 has saved. Furthermore, the data analysis unit 202 analyzes a captured video to detect a prescribed event from the captured video. For example, when a trash box is equipped with the monitored device 100 as described above, the data analysis unit 202 may analyze a captured video to detect, as a prescribed event described above, that trash is dumped.

The data analysis unit 202 identifies time information that corresponds to capturing time information indicating a time at which an event occurred and is saved in the data saving unit 201. For example, the data analysis unit 202 may, with respect to capturing time information, identify one or two or more pieces of time information each of which indicates a prescribed range of time. The time at which an event occurred is, hereinafter, also referred to as an event occurrence time.

The data analysis unit 202 identifies terminal distance information, terminal direction information, and identification information related to the identified time information. In other words, the data analysis unit 202 identifies identification information included in a signal that had been received during a time period indicated by capturing time information and identifies terminal distance information and terminal direction information estimated based on the signal.

The data analysis unit 202, by identifying identification information that identifies a person who is a likely cause of an occurrence of an event based on the identified terminal distance information, terminal direction information, and identification information, estimates a person who is a likely cause of an occurrence of an event.

For example, the data analysis unit 202 may, using the terminal distance information and terminal direction information, estimate a user of a terminal that came close to the monitored device 100 before an event occurrence time and went away from the monitored device 100 after the event occurrence time as a person who is a likely cause of the occurrence of the event. Specifically, the data analysis unit 202 may estimate a user of a terminal that came close to the radio base station 104 before an event occurrence time and went away from the radio base station 104 after the event occurrence time as a person who is a likely cause of the occurrence of the event. In the following description, a person who is a likely cause of an occurrence of an event is referred to as an event occurrence causing candidate.

Furthermore, the data analysis unit 202 saves information for identifying the monitored device 100, an event occurrence time, information for identifying an event occurrence causing candidate (that is, identification information), a captured video captured at the event occurrence time in association with one another in the data saving unit 201. When each trash box is equipped with the monitored device 100, the information for identifying the monitored device 100 may be a number and the like assigned to each trash box.

Next, an operation of the monitoring system 1 according to the present example embodiment will be described. In the following description, it is assumed that each of the terminal distance estimation unit 101 and the terminal direction estimation unit 102 transmits a subscriber ID to the data saving unit 201 as identification information.

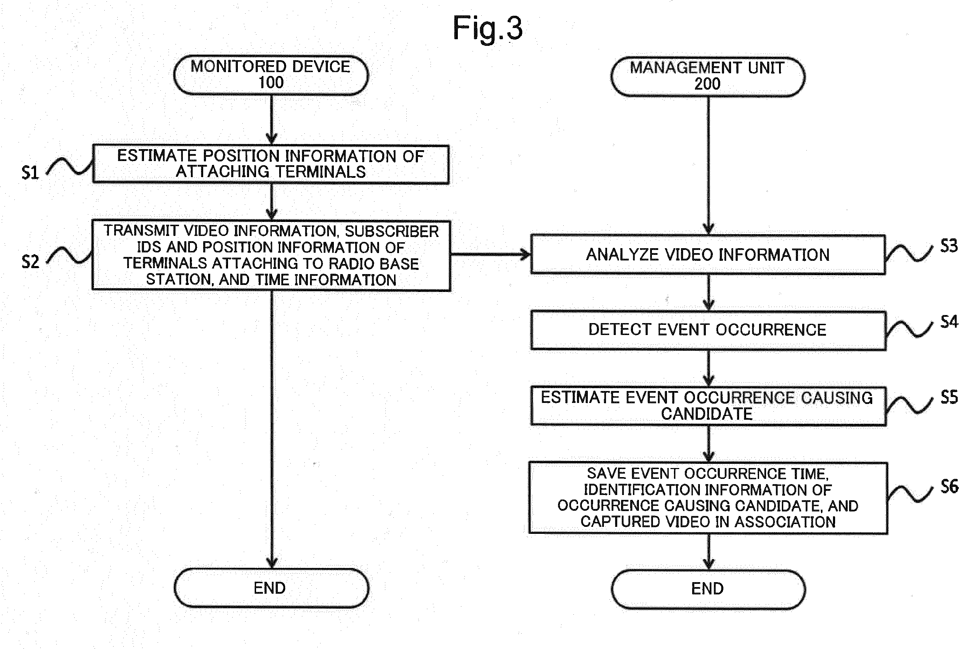

Fig. 3 is a flowchart illustrating an example of an operation of the monitored device 100 and an example of an operation of the management unit 200.

It is assumed that the monitored device 100 is constantly operating repeating processing in step S1 and processing in step S2 illustrated in Fig. 3. It is also assumed that, until the management unit 200 detects a prescribed event, the management unit 200 is constantly operating repeating processing in step S3 illustrated in Fig. 3.

Hereinafter, respective processing illustrated in Fig. 3 will be described in detail.

In step S1, the monitored device 100 receives a signal from a terminal attaching thereto and estimates position information of the terminal. In the above, the position information is assumed to be information including terminal distance information and terminal direction information.

Specifically, with respect to each terminal attaching to the radio base station 104, the terminal distance estimation unit 101 estimates a distance from the monitored device 100 having the radio base station 104 built-in to the terminal as terminal distance information based on information obtained from the Massive MIMO.

Furthermore, with respect to each terminal attaching to the radio base station 104, the terminal direction estimation unit 102 estimates a direction from the monitored device having the radio base station 104 built-in as terminal direction information based on the information obtained from the Massive MIMO.

In step S2, the monitored device 100 transmits video information, subscriber IDs and position information of terminals attaching to the radio base station 104, and time information.

Specifically, the monitored device 100 transmits video information including a captured video and capturing time information thereof to the data saving unit 201 via the network 300. The monitored device 100 preferably transmits the video information to the data saving unit 201 in so-called real time (that is, within a time period not longer than a prescribed threshold value after acquisition of video information). The monitored device 100 also transmits the subscriber IDs of terminals attaching to the radio base station 104, position information of the terminals (terminal distance information and terminal direction information), and time information to the data saving unit 201 via the network 300. In the above, the monitored device 100 preferably transmits the subscriber IDs of terminals attaching to the radio base station 104, position information of the terminals, and time information to the data saving unit 201 in so-called real time (that is, within a time period not longer than a prescribed threshold value after acquisition of the information).

In step S3, the management unit 200 analyzes video information.

Specifically, the data analysis unit 202 acquires video information saved in the data saving unit 201. The data analysis unit 202 analyzes the acquired video information and determines whether or not a prescribed event has occurred. In the above, the data analysis unit 202 preferably analyzes the acquired video information in so-called real time (that is, within a time period not longer than a prescribed threshold value after the video information has been stored in the data saving unit 201). The data analysis unit 202 repeats the acquisition of video information and the analysis of the video information.

In the above-described processing in step S2, a case in which the monitored device 100 transmits video information to the data saving unit 201 was described. Specifically, when the management unit 200 receives video information from the monitored device 100, the management unit 200 saves the received video information in the data saving unit 201. Subsequently, the data analysis unit 202 acquires the video information from the data saving unit 201.

However, the monitored device 100 may transmit video information to the data analysis unit 202. In other words, when the management unit 200 receives video information from the monitored device 100, the management unit 200 hands the received video information to the data analysis unit 202. Subsequently, after performing analysis on the video information, the data analysis unit 202 may save the video information in the data saving unit 201. Alternatively, the data analysis unit 202 may save the video information in the data saving unit 201 while performing the analysis of the video information.

In step S4, the data analysis unit 202 detects an event occurrence.

Specifically, the data analysis unit 202 analyzes the video information and, when detecting a prescribed event, transitions to step S5. For example, when a trash box is equipped with the monitored device 100, the prescribed event is assumed to mean dumping of trash. In this case, the data analysis unit 202 analyzes the video information and, when detecting that trash is dumped, transitions to step S5.

In step S5, the data analysis unit 202 estimates an event occurrence causing candidate.

Specifically, based on a detection result of an occurrence of an event, the data analysis unit 202 identifies an event occurrence time and identifies time information corresponding to the event occurrence time. The data analysis unit 202 identifies position information of terminals (terminal distance information and terminal direction information) related to the identified time information. Based on the identified position information, the data analysis unit 202 estimates an event occurrence causing candidate. The data analysis unit 202 may estimate two or more persons as event occurrence causing candidates.

In step S6, the data analysis unit 202 saves an event occurrence time, identification information for identifying an event occurrence causing candidate(s), and a captured video in association with one another.

Specifically, the data analysis unit 202 saves an event occurrence time, the subscriber ID(s) of an event occurrence causing candidate(s), a captured video related to the event occurrence time in association with one another in the data saving unit 201. Alternatively, the data analysis unit 202 may save information for identifying the monitored device 100, an event occurrence time, the subscriber ID(s) of an event occurrence causing candidate(s), a captured video related to the event occurrence time in association with one another in the data saving unit 201.

For example, when the management unit 200 includes a display unit (not illustrated), the management unit 200 may display a subscriber ID(s) of an event occurrence causing candidate(s) superposed on an analyzed captured video.

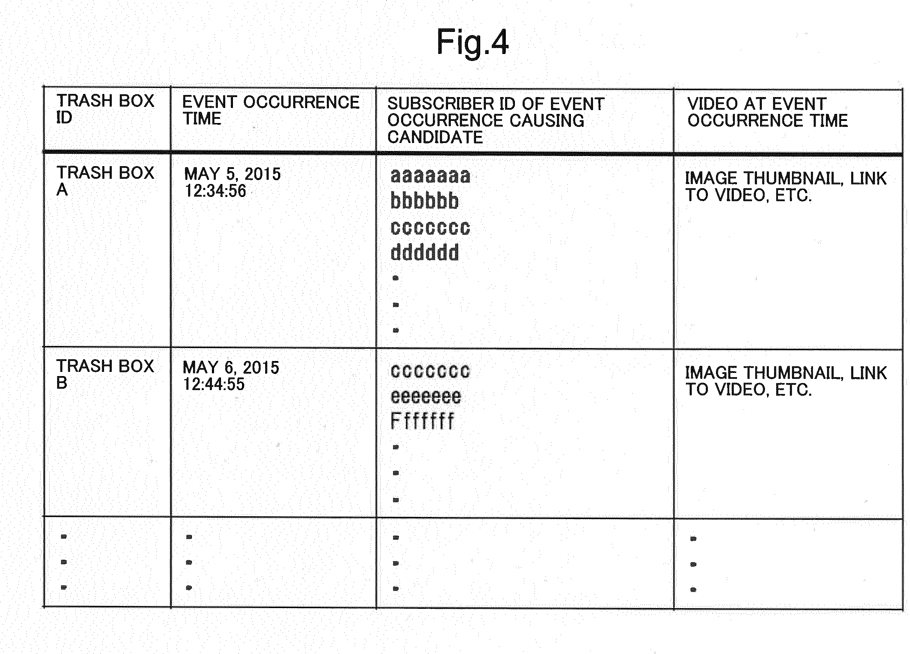

Fig. 4 is a diagram illustrating an example of an analysis result of video information. Specifically, Fig. 4 illustrates an example of an analysis result of video information in a case where a trash box is equipped with a monitored device 100. In the analysis result illustrated in Fig. 4, each piece of information for identifying a monitored device 100 is referred to as a trash box ID.

The data saving unit 201 may save information associating a trash box ID, an event occurrence time, a subscriber ID(s) of an event occurrence causing candidate(s), a video captured at the event occurrence time with one another in the form of a table, as illustrated in Fig. 4. As illustrated in Fig. 4, the data saving unit 201 may also save an analysis result of video information in which the subscriber IDs of two or more event occurrence causing candidates are associated with one event occurrence time.

### [Variation 1]

As a variation 1 of the monitoring system 1 according to the present example embodiment, the radio base station 104 may be installed at a location distant from the monitored device 100. In this case, the monitored device 100 preferably stores a positional relationship between the radio base station 104 and the monitored device 100 in advance. In this case, the monitored device 100 transmits the positional relationship between the radio base station 104 and the monitored device 100. The data analysis unit 202 estimates an event occurrence causing candidate(s) in consideration of the positional relationship between the radio base station 104 and the monitored device 100 (that is, by offsetting the positions thereof using the positional relationship).

As described thus far, the monitored device 100 according to the present example embodiment, with respect to each terminal attaching to the radio base station 104, estimates position information of the terminal in an area around the radio base station 104. The area around the radio base station 104 indicates a range within which the radio base station is communicable with a terminal. The monitored device 100 according to the present example embodiment extracts a terminal that came close to the monitored device 100 at an event occurrence time out of terminals existing in the area around the radio base station 104 based on position information. Furthermore, the monitored device 100 according to the present example embodiment identifies a person who uses the terminal that came close to the monitored device 100. Therefore, when a prescribed event has occurred to a device, a facility, and the like, the monitoring system 1 according to the present example embodiment contributes to easily identifying a person who is a likely cause of the occurrence of the event.

### [Second Example Embodiment]

Next, a second example embodiment will be described in more detail using the drawings.

The present example embodiment is an example embodiment in which a monitored device includes a sensor and, based on an output from the sensor, detects a prescribed event. In the description of the present example embodiment, a description of a portion overlapping the above-described example embodiment will be omitted. Furthermore, in the description of the present example embodiment, the same reference symbols are assigned to the same constituent elements as those in the above-described example embodiment, and a description thereof will be omitted. In the description of the present example embodiment, a description of the same operational effects as those in the above-described example embodiment will also be omitted. For example, as with the first example embodiment, a management unit (management device) 200 may be arranged inside a monitored device 100a.

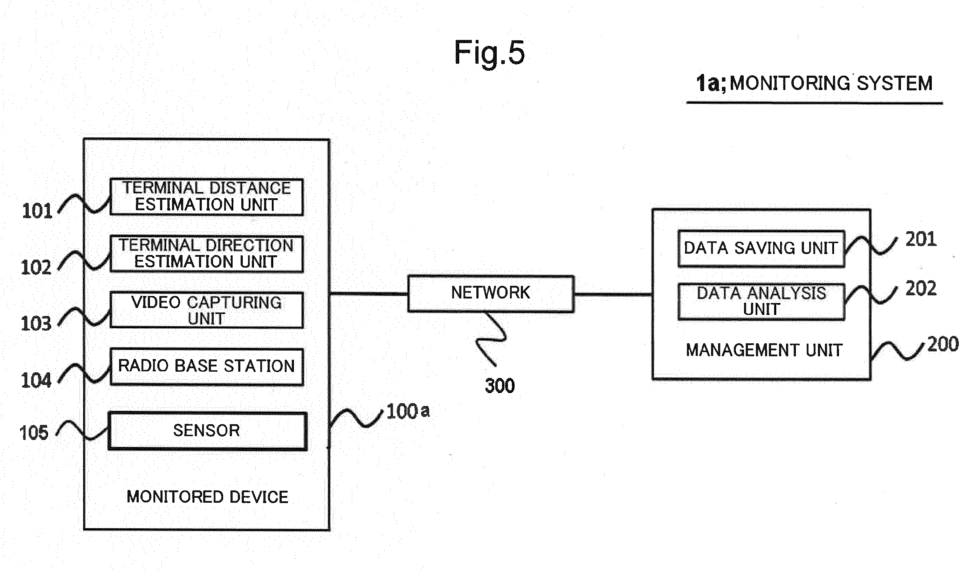

Fig. 5 is a block diagram illustrating an example of an overall configuration of a monitoring system 1a according to the present example embodiment. A difference between the monitoring system 1a illustrated in Fig. 5 and the monitoring system 1 illustrated in Fig. 2 is that the monitored device 100a illustrated in Fig. 5 includes a sensor 105. In the following description, differences from the first example embodiment will be described in detail.

The sensor 105 acquires information required for detecting an occurrence of a prescribed event. For example, a trash box is assumed to be equipped with the monitored device 100a, and dumping of trash is defined to be the above-described prescribed event. In this case, the sensor 105 may be, for example, a weight sensor that acquires changes in weight as the above-described required information, or, when the trash box is a trash box having an openable and closable trash slot, may be a sensor that detects (acquires) opening and closing of the trash slot as the above-described required information. In the above, the information required for detecting a prescribed event occurrence may be reworded into information related to the prescribed event occurrence. The monitored device 100a treats a time at which the sensor 105 acquired the above-described information as an event occurrence time.

Next, an operation of the monitoring system 1a according to the present example embodiment will be described.

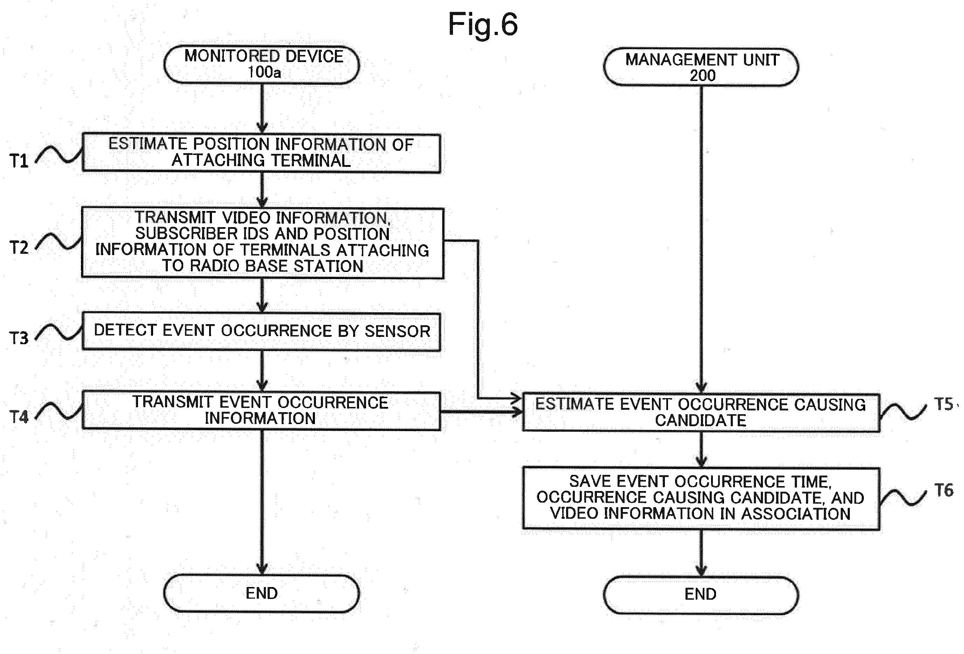

Fig. 6 is a flowchart illustrating an example of an operation of the monitored device 100a and an example of an operation of the management unit 200. Since processing in steps T1, T2, T5, and T6 illustrated in Fig. 6 are the same as the processing in steps S1, S2, S5, and S6 illustrated in Fig. 3, respectively, a detailed description thereof will be omitted.

It is now assumed that the processing in steps T1 and T2 illustrated in Fig. 6 has been performed. In this case, in step T3, the monitored device 100a determines whether or not a prescribed event occurrence is detected based on whether or not the sensor 105 has acquired information. Hereinafter, information relating to an event occurrence is referred to as event occurrence information. For example, the event occurrence information preferably includes information indicating that an event has occurred and information of an event occurrence time.

When the monitored device 100a has detected an event occurrence based on the sensor 105 having acquired information, the monitored device 100a transmits the event occurrence information to the management unit 200 (step T4). A data analysis unit 202, based on the information transmitted from the monitored device 100a, estimates an event occurrence causing candidate(s) (step T5). Subsequently, the data analysis unit 202 saves an event occurrence time, identification information for identifying an event occurrence causing candidate(s), and a captured video in association with one another in a data saving unit 201 (step T6).

### [Variation 1]

As a variation 1 of the monitoring system 1a according to the present example embodiment, the monitored device 100a may determine whether or not the monitored device 100a is usable depending on whether or not an estimated terminal and/or subscriber is/are a terminal and/or subscriber of a specific telecommunications carrier.

For example, it is assumed that a trash box is equipped with the monitored device 100a and the slot of the trash box is equipped with a lid. It is also assumed that the monitored device 100a has a structure that is capable of controlling opening and closing of the lid of the trash box. In other words, the monitored device 100a is assumed to include a lid opening/closing unit (not illustrated) that controls opening and closing of the lid of the trash box. In this case, the lid opening/closing unit of the monitored device 100a may control opening and closing of the lid of the trash box depending on whether or not an estimated terminal and/or subscriber is/are a terminal and/or subscriber of a specific telecommunications carrier. Specifically, when an estimated terminal and/or subscriber is/are a terminal and/or subscriber of a specific telecommunications carrier, the lid opening/closing unit of the monitored device 100a may perform control in such a way as to bring the trash box to a state in which the lid thereof is opened. On the other hand, when the estimated terminal and/or subscriber is/are not a terminal and/or subscriber of the specific telecommunications carrier, the lid opening/closing unit of the monitored device 100a may perform control in such a way as to bring the trash box to a state in which the lid thereof is closed.

As described thus far, in the monitoring system 1a according to the present example embodiment, the monitored device 100a includes a sensor. The sensor acquires information required for detecting a prescribed event occurrence to the monitored device 100a. As a result, the monitored device 100a according to the present example embodiment contributes to easily detecting an event occurrence causing candidate(s). Therefore, when a prescribed event has occurred to a device, a facility, and the like, the monitoring system 1a according to the present example embodiment contributes to more easily identifying a person who is a likely cause of the occurrence of the event.

All or part of the example embodiments described above may be described as in the following supplementary notes, but the present invention is not limited thereto.

(Supplementary note 1) A monitoring system, comprising: a monitored device; and a management device that communicates with the monitored device, wherein the monitored device comprises: a signal receiving means for receiving a signal including identification information for identifying a terminal from the terminal existing within a prescribed range from the monitored device as a received signal; a terminal distance estimation means for, based on the received signal, estimating a distance from the monitored device to the terminal as terminal distance information; a terminal direction estimation means for, based on the received signal, estimating a direction directed from the monitored device to the terminal as terminal direction information; and a video capturing means for capturing a prescribed image-capturing range that is a neighborhood of the monitored device, and the management device comprises a data analysis means for analyzing a captured video that the video capturing means has captured to determine whether or not a prescribed event has occurred, and, in conjunction therewith, identifying the terminal distance information, the terminal direction information, and the identification information that are related to a capturing time of the captured video.

(Supplementary note 2) The monitoring system according to supplementary note 1, wherein when determining that the event has occurred, the data analysis means, based on the terminal distance information, the terminal direction information, and the identification information, estimates an event occurrence causing candidate.

(Supplementary note 3) The monitoring system according to supplementary note 2, wherein when determining that the event has occurred, the data analysis means identifies a terminal that came close to the monitored device before a time at which the event occurred and went away from the monitored device after the time at which the event occurred and estimates the event occurrence causing candidate that is related to the identified terminal.

(Supplementary note 4) The monitoring system according to any one of supplementary notes 1 to 3, wherein the terminal distance estimation means, based on reception intensity of the received signal, estimates a distance from the monitored device to the terminal that is a transmission source of the received signal, and the terminal direction estimation means, based on the reception intensity, estimates a direction directed from the monitored device to the terminal that is a transmission source of the received signal.

(Supplementary note 5) A monitored device, comprising: a signal receiving means for receiving a signal including identification information for identifying a terminal from the terminal existing in a prescribed range as a received signal; a terminal distance estimation means for, based on the received signal, estimating a distance from the monitored device itself to the terminal as terminal distance information; a terminal direction estimation means for, based on the received signal, estimating a direction directed from the monitored device itself to the terminal as terminal direction information; a video capturing means for capturing a prescribed image-capturing range that is a neighborhood of the monitored device itself; and a data analysis means for, based on determination of whether or not a prescribed event has occurred, identifying the terminal distance information, the terminal direction information, and the identification information that are related to a capturing time of a captured video.

(Supplementary note 6) The monitored device according to supplementary note 5, wherein the terminal distance estimation means, based on reception intensity of the received signal, estimates a distance from the monitored device to the terminal that is a transmission source of the received signal, and the terminal direction estimation means, based on the reception intensity, estimates a direction directed from the monitored device to the terminal that is a transmission source of the received signal.

(Supplementary note 7) The monitored device according to supplementary note 5 or 6, further comprising a sensor that acquires information related to a prescribed event occurrence, wherein, in response to acquisition of the related information by the sensor, the data analysis means, based on the terminal distance information, the terminal direction information, and the identification information, estimates an event occurrence causing candidate.

(Supplementary note 8) A control method of a monitoring system including a monitored device that is communicable with a terminal, the method comprising: receiving a signal including identification information for identifying the terminal from the terminal existing within a prescribed range from the monitored device as a received signal; based on the received signal, estimating a distance from the monitored device to the terminal as terminal distance information; based on the received signal, estimating a direction directed from the monitored device to the terminal as terminal direction information; capturing a prescribed image-capturing range that is a neighborhood of the monitored device; and analyzing a captured video that has been captured to determine whether or not a prescribed event has occurred, and, in conjunction therewith, identifying the terminal distance information, the terminal direction information, and the identification information that are related to a capturing time of the captured video.

(Supplementary note 9) A control method of a monitored device, the method comprising: receiving a signal including identification information for identifying a terminal from the terminal existing within a prescribed range as a received signal; based on the received signal, estimating a distance from the monitored device to the terminal as terminal distance information; based on the received signal, estimating a direction directed from the monitored device to the terminal as terminal direction information; capturing a prescribed image-capturing range that is a neighborhood of the monitored device; and based on determination of whether or not a prescribed event has occurred, identifying the terminal distance information, the terminal direction information, and the identification information that are related to a capturing time of a captured video.

(Supplementary note 10) The control method according to supplementary note 9, the method further comprising: acquiring information related to a prescribed event occurrence; and in response to acquisition of the related information, based on the terminal distance information, the terminal direction information, and the identification information, estimating an event occurrence causing candidate.

(Supplementary note 11)
A recording medium storing a program that is executed by a computer controlling a monitored device, the program making a computer execute: processing for receiving a signal including identification information for identifying a terminal from the terminal existing within a prescribed range as a received signal; processing for, based on the received signal, estimating a distance from the monitored device to the terminal as terminal distance information; processing for, based on the received signal, estimating a direction directed from the monitored device to the terminal as terminal direction information; processing for capturing a prescribed image-capturing range that is a neighborhood of the monitored device; and processing for analyzing a captured video that has been captured to determine whether or not a prescribed event has occurred, and, in conjunction therewith, identifying the terminal distance information, the terminal direction information, and the identification information that are related to a capturing time of the captured video.

(Supplementary note 12) A program that is executed by a computer controlling a management device that communicates with a monitored device, the monitored device including a terminal distance estimation unit that, based on a received signal including identification information for identifying a terminal, estimates a distance from the monitored device to the terminal as terminal distance information, a terminal direction estimation unit that, based on the received signal, estimates a direction directed from the monitored device to the terminal as terminal direction information, and a video capturing unit that captures a prescribed image-capturing range that is a neighborhood of the monitored device, the program making the computer execute: processing for analyzing a captured video that has been captured; processing for, based on the captured video, determining whether or not a prescribed event has occurred; and processing for identifying the terminal distance information, the terminal direction information, and the information for identifying identification that are related to a capturing time of the captured video.

The example embodiments may be changed and adjusted in the scope of the entire disclosure (including claims) of the present invention and based on the basic technological concept thereof. In the scope of the entire disclosure of the present invention, various disclosed elements (including respective elements of the claims, respective elements of the example embodiments, respective elements of the drawings, and so on) may be combined and selected in a variety of ways. That is, it is apparent that the present invention includes various modifications and changes that may be made by those skilled in the art without departing from the scope of the invention as it is depicted in the appended claims. In particular, with regard to ranges of numerical values set forth herein, arbitrary numerical values or sub-ranges contained within the ranges should be interpreted as being specifically set forth, even if not otherwise set forth.

This application claims priority based on Japanese Patent Publication No. JPWO2016157825 (A1).

### [Reference signs List]

- 1, 1a, 1000: Monitoring system
- 100, 100a, 1010: Monitored device
- 101, 1012: Terminal distance estimation unit
- 102, 1013: Terminal direction estimation unit
- 103, 1014: Video capturing unit
- 104: Radio base station
- 105: Sensor
- 200: Management unit
- 201: Data saving unit
- 202, 1021: Data analysis unit
- 300: Network
- 1011: Signal receiver
- 1020: Management device

## Claims

1. A monitoring system (1000), comprising:
a monitored device (1010); and
a management device (1020) that communicates with the monitored device (1010),
wherein the monitored device (1010) comprises:
a signal receiving means (1011) for receiving a signal including identification information for identifying a terminal existing within a prescribed range from the monitored device (1010), as a received signal from the terminal;
a terminal distance estimation means (1012) for, based on the received signal, estimating a distance from the monitored device (1010) to the terminal as terminal distance information;
a terminal direction estimation means (1013) for, based on the received signal, estimating a direction directed from the monitored device (1010) to the terminal as terminal direction information; and
a video capturing means (1014) for capturing a prescribed image-capturing range that is a neighborhood of the monitored device (1010),
the monitoring system (1000) being **characterized in that**:
the management device (1020) comprises a data analysis means (1021) for analyzing a captured video that the video capturing means (1014) has captured to determine whether or not a prescribed event has occurred, and, in conjunction therewith, identifying the terminal distance information, the terminal direction information, and the identification information that are related to a capturing time of the captured video and based on the identified terminal distance information, terminal direction information, and identification information to determine a person who is likely a cause of the occurrence of a prescribed event among users of monitored devices (1010) which were attached to the management device (1020) when the prescribed event occurred.

2. The monitoring system (1000) according to claim 1, wherein
when determining that the event has occurred, the data analysis means (1021) is configured to estimate, based on the terminal distance information, the terminal direction information, and the identification information, an event occurrence causing candidate.

3. The monitoring system (1000) according to claim 2, wherein
when determining that the event has occurred, the data analysis means (1021) is configured to identify a terminal that came close to the monitored device (1010) before a time at which the event occurred and went away from the monitored device (1010) after the time at which the event occurred and to estimate the event occurrence causing candidate that is related to the identified terminal.

4. The monitoring system (1000) according to any one of claims 1 to 3, wherein
the terminal distance estimation means (1012) is configured to estimate, based on reception intensity of the received signal, a distance from the monitored device (1010) to the terminal that is a transmission source of the received signal, and
the terminal direction estimation means (1013) is configured to estimate, based on the reception intensity, a direction directed from the monitored device (1010) to the terminal that is a transmission source of the received signal.

5. The monitoring system (1000) according to any of claims 1 to 4, further comprising
a sensor (105) for acquiring information related to a prescribed event occurrence,
wherein, in response to acquisition of the related information by the sensor, the data analysis means (1021) is configured to estimate, based on the terminal distance information, the terminal direction information, and the identification information, an event occurrence causing candidate.

6. A method for controlling a monitoring system (1000) including at least one monitored device (1010) and a management device (1020), the at least one monitored device (1010) communicable with a terminal, the method comprising:
receiving a signal including identification information for identifying the terminal existing within a prescribed range from the monitored device (1010), as a received signal from the terminal;
based on the received signal, estimating a distance from the at least one monitored device (1010) to the terminal as terminal distance information;
based on the received signal, estimating a direction directed from the at least one monitored device (1010) to the terminal as terminal direction information; and
capturing a prescribed image-capturing range that is a neighborhood of the at least one monitored device (1010);
**characterized in that** the method further comprises:
analyzing a captured video that has been captured to determine whether or not a prescribed event has occurred, and, in conjunction therewith, identifying the terminal distance information, the terminal direction information, and the identification information that are related to a capturing time of the captured video and based on the identified terminal distance information, terminal direction information, and identification information to determine a person who is likely a cause of the occurrence of a prescribed event among users of the at least one monitored device (1010) which were attached to the management device (1020) when the prescribed event occurred.

7. A program that is executed by a computer, the program making a computer execute:
processing for receiving a signal including identification information for identifying a terminal existing within a prescribed range, as a received signal from the terminal;
processing for, based on the received signal, estimating a distance from at least one monitored device (1010) to the terminal as terminal distance information;
processing for, based on the received signal, estimating a direction directed from the at least one monitored device (1010) to the terminal as terminal direction information; and
processing for capturing a prescribed image-capturing range that is a neighborhood of the at least one monitored device (1010);
**characterized in** making the computer further execute:
processing for analyzing a captured video that has been captured to determine whether or not a prescribed event has occurred, and, in conjunction therewith, identifying the terminal distance information, the terminal direction information, and the identification information that are related to a capturing time of the captured video and based on the identified terminal distance information, terminal direction information, and identification information to determine a person who is likely a cause of the occurrence of a prescribed event among users of the at least one monitored device (1010) which were attached to a management device (1020) when the prescribed event occurred.

## Patentansprüche

1. Überwachungssystem (1000) mit:
einer überwachten Vorrichtung (1010); und
einer Managementvorrichtung (1020), die mit der überwachten Vorrichtung (1010) kommuniziert, wobei die überwachte Vorrichtung (1010) aufweist:
eine Signalempfangseinrichtung (1011) zum Empfangen eines Signals, das Identifizierungsinformation zum Identifizieren eines Endgeräts enthält, das innerhalb eines vorgegebenen Bereichs von der überwachten Vorrichtung (1010) vorhanden ist, als ein empfangenes Signal vom Endgerät;
einer Endgerätabstandsschätzeinrichtung (1012) zum Schätzen eines Abstands von der überwachten Vorrichtung (1010) zum Endgerät als Endgerätabstandsinformation basierend auf dem empfangenen Signal;
einer Endgerätrichtungsschätzeinrichtung (1013) zum Schätzen einer Richtung von der überwachten Vorrichtung (1010) zum Endgerät als Endgerätrichtungsinformation basierend auf dem empfangenen Signal; und
einer Videoaufnahmeeinrichtung (1014) zum Erfassen eines vorgegebenen Bildaufnahmebereichs, der eine Umgebung der überwachten Vorrichtung (1010) darstellt,
wobei das Überwachungssystem (1000) **dadurch gekennzeichnet ist, dass**:
die Managementeinrichtung (1020) eine Datenanalyseeinrichtung (1021) zum Analysieren eines aufgenommenen Videos aufweist, das die Videoaufnahmeeinrichtung (1014) aufgenommen hat, um zu bestimmen, ob ein vorgegebenes Ereignis aufgetreten ist oder nicht, und in Verbindung damit die Endgerätabstandsinformation, die Endgerätrichtungsinformation und die Identifizierungsinformation zu identifizieren, die mit einer Aufnahmezeit des aufgenommenen Videos in Beziehung stehen, und basierend auf der identifizierten Endgerätabstandsinformation, Endgerätrichtungsinformation und Identifizierungsinformation eine Person, die wahrscheinlich eine Ursache für das Auftreten eines vorgegebenen Ereignisses ist, unter Benutzern überwachter Vorrichtungen (1010) zu bestimmen, die mit der Managementeinrichtung (1020) verbunden waren, als das vorgegebene Ereignis eintrat.

2. Überwachungssystem (1000) nach Anspruch 1, wobei
wenn bestimmt wird, dass das Ereignis aufgetreten ist, die Datenanalyseeinrichtung (1021) dafür konfiguriert ist, basierend auf der Endgerätabstandsinformation, der Endgerätrichtungsinformation und der Identifizierungsinformation einen Kandidaten zu schätzen, der das Ereignis verursacht hat.

3. Überwachungssystem (1000) nach Anspruch 2, wobei
wenn bestimmt wird, dass das Ereignis aufgetreten ist, die Datenanalyseeinrichtung (1021) dafür konfiguriert ist, ein Endgerät zu identifizieren, das sich der überwachten Vorrichtung (1010) vor einem Zeitpunkt, zu dem das Ereignis aufgetreten ist, genähert hat und sich nach dem Zeitpunkt, zu dem das Ereignis aufgetreten ist, von der überwachten Vorrichtung (1010) entfernt hat, und den mit dem identifizierten Endgerät in Beziehung stehenden Kandidaten zu schätzen, der das Auftretendes Ereignisses verursacht hat.

4. Überwachungssystem (1000) nach einem der Ansprüche 1 bis 3,
wobei die Endgerätabstandsschätzeinrichtung (1012) dafür konfiguriert ist, basierend auf der Empfangsintensität des empfangenen Signals einen Abstand von der überwachten Vorrichtung (1010) zum Endgerät zu schätzen, das eine Übertragungsquelle des empfangenen Signals ist, und
die Endgerätrichtungsschätzeinrichtung (1013) dafür konfiguriert ist, basierend auf der Empfangsintensität eine Richtung von der überwachten Vorrichtung (1010) zum Endgerät zu schätzen, das eine Übertragungsquelle des empfangenen Signals ist.

5. Überwachungssystem (1000) nach einem der Ansprüche 1 bis 4, ferner mit:
einem Sensor (105) zum Erfassen von Information, die mit dem Auftreten eines vorgegebenen Ereignisses in Beziehung steht,
wobei in Antwort auf das Erfassen der in Beziehung stehenden Information durch den Sensor die Datenanalyseeinrichtung (1021) dafür konfiguriert ist, basierend auf der Endgerätabstandsinformation, der Endgerätrichtungsinformation und der Identifizierungsinformation einen Kandidaten zu schätzen, der das Auftreten des Ereignisses verursacht hat.

6. Verfahren zum Steuern eines Überwachungssystems (1000), das mindestens eine überwachte Vorrichtung (1010) und eine Managementeinrichtung (1020) aufweist, wobei die mindestens eine überwachte Vorrichtung (1010) in der Lage ist, mit einem Endgerät zu kommunizieren, wobei das Verfahren die Schritte aufweist:
Empfangen eines Signals, das Identifizierungsinformation zum Identifizieren des in einem vorgegebenen Bereich von der überwachten Vorrichtung (1010) vorhandenen Endgeräts enthält, als ein empfangenes Signal vom Endgerät;
Schätzen eines Abstands von der mindestens einen überwachten Vorrichtung (1010) zum Endgerät als Endgerätabstandsinformationbasierend auf dem empfangenen Signal;
Schätzen einer Richtung von der mindestens einen überwachten Vorrichtung (1010) zum Endgerät als Endgerätrichtungsinformation basierend auf dem empfangenen Signal; und
Aufnehmen eines vorgegebenen Bildaufnahmebereichs, der eine Umgebung der mindestens einen überwachten Vorrichtung (1010) darstellt;
**dadurch gekennzeichnet, dass** das Verfahren ferner die Schritte aufweist:
Analysieren eines aufgenommenen Videos, das aufgenommen wurde, um zu bestimmen, ob ein vorgegebenes Ereignis aufgetreten ist oder nicht, und in Verbindung damit die Endgerätabstandsinformation, die Endgerätrichtungsinformation und die Identifizierungsinformation zu identifizieren, die mit einer Aufnahmezeit des aufgenommenen Videos in Beziehung stehen, und basierend auf der identifizierten Endgerätabstandsinformation, Endgerätrichtungsinformation und Identifizierungsinformation eine Person, die wahrscheinlich eine Ursache für das Auftreten eines vorgegebenen Ereignisses ist, unter Benutzern der mindestens einen überwachten Vorrichtung (1010) zu bestimmen, die mit der Managementeinrichtung (1020) verbunden waren, als das vorgegebene Ereignis aufgetreten ist.

7. Programm, das durch einen Computer ausgeführt wird, wobei das Programm einen Computer veranlasst, auszuführen:
eine Verarbeitung zum Empfangen eines Signals, das Identifizierungsinformation zum Identifizieren eines in einem vorgegebenen Bereich vorhandenen Endgeräts enthält, als ein empfangenes Signal vom Endgerät;
eine Verarbeitung, die basierend auf dem empfangenen Signal einen Abstand von mindestens einer überwachten Vorrichtung (1010) zum Endgerät als Endgerätabstandsinformation schätzt;
eine Verarbeitung, die basierend auf dem empfangenen Signal eine Richtung von der mindestens einen überwachten Vorrichtung (1010) zumEndgerät als Endgerätabstandsinformation schätzt; und
eine Verarbeitung zum Aufnehmen eines vorgegebenen Bildaufnahmebereichs, der eine Umgebung der mindestens einen überwachten Vorrichtung (1010) darstellt;
**dadurch gekennzeichnet, dass** der Computer ferner ausführt:
eine Verarbeitung zum Analysieren eines aufgenommenen Videos, das aufgenommen worden ist, um zu bestimmen, ob ein vorgegebenes Ereignis aufgetreten ist oder nicht, und in Verbindung damit die Endgerätabstandsinformation, die Endgerätrichtungsinformation und die Identifizierungsinformation zu identifizieren, die mit der Aufnahmezeit des aufgenommenen Videos in Beziehung stehen, und basierend auf der identifizierten Endgerätabstandsinformation, der Endgerätrichtungsinformation und der Identifizierungsinformation eine Person, die wahrscheinlich eine Ursache für das Auftreten eines vorgegebenen Ereignisses ist, unter Benutzern der mindestens einen überwachten Vorrichtung (1010) zu bestimmen, die mit der Managementeinrichtung (1020) verbunden waren, als das vorgegebene Ereignis aufgetreten ist.

## Revendications

1. Système de surveillance (1000), comprenant:
un dispositif surveillé (1010) ; et
un dispositif de gestion (1020) qui communique avec le dispositif surveillé (1010),
dans lequel le dispositif surveillé (1010) comprend :
un moyen de réception de signal (1011) pour recevoir un signal comportant des informations d'identification pour identifier un terminal existant dans une portée prescrite à partir du dispositif surveillé (1010), en tant que signal reçu depuis le terminal ;
un moyen d'estimation de distance de terminal (1012) pour, sur la base du signal reçu, estimer une distance entre le dispositif surveillé (1010) et le terminal en tant qu'informations de distance de terminal ;
un moyen d'estimation de direction de terminal (1013) pour, sur la base du signal reçu, estimer une direction dirigée du dispositif surveillé (1010) au terminal en tant qu'informations de direction de terminal ; et
un moyen de capture vidéo (1014) pour capturer une portée de capture d'image prescrite qui est un voisinage du dispositif surveillé (1010),
le système de surveillance (1000) étant **caractérisé en ce que** :
le dispositif de gestion (1020) comprend
un moyen d'analyse de données(1021) pour analyser une vidéo capturée que le moyen de capture vidéo (1014) a capturée pour déterminer si oui ou non un événement prescrit est survenu, et, conjointement à cela, identifier les informations de distance de terminal, les informations de direction de terminal, et les informations d'identification qui sont associées à un moment de capture de la vidéo capturée, et sur la base des informations de distance de terminal, des informations de direction de terminal et des informations d'identification identifiées, déterminer une personne qui est susceptible de provoquer la survenue d'un événement prescrit parmi des utilisateurs de dispositifs surveillés (1010) qui ont été attachés au dispositif de gestion (1020) lorsque l'événement prescrit est survenu.

2. Système de surveillance (1000) selon la revendication 1, dans lequel
lors de la détermination du fait que l'événement est survenu, le moyen d'analyse de données (1021) est configuré pour estimer, sur la base des informations de distance de terminal, des informations de direction de terminal et des informations d'identification, un candidat provoquant une survenue d'événement.

3. Système de surveillance (1000) selon la revendication 2, dans lequel
lors de la détermination du fait que l'événement est survenu, le moyen d'analyse de données (1021) est configuré pour identifier un terminal qui est venu à proximité du dispositif surveillé (1010) avant un moment auquel l'événement est survenu et s'est éloigné du dispositif surveillé (1010) après le moment auquel l'événement est survenu et pour estimer le candidat provoquant une survenue d'événement qui est associé au terminal identifié.

4. Système de surveillance (1000) selon l'une quelconque des revendications 1 à 3, dans lequel
le moyen d'estimation de distance de terminal (1012) est configuré pour estimer, sur la base d'une intensité de réception du signal reçu, une distance entre le dispositif surveillé (1010) et le terminal qui est une source de transmission du signal reçu, et
le moyen d'estimation de direction de terminal (1013) est configuré pour estimer, sur la base de l'intensité de réception, une direction dirigée du dispositif surveillé (1010) au terminal qui est une source de transmission du signal reçu.

5. Système de surveillance (1000) selon l'une quelconque des revendications 1 à 4, comprenant en outre
un capteur(105) pour acquérir des informations associées à une survenue d'événement prescrit,
dans lequel, en réponse à l'acquisition des informations associées par le capteur, le moyen d'analyse de données (1021) est configuré pour estimer, sur la base des informations de distance de terminal, des informations de direction de terminal et des informations d'identification, un candidat provoquant une survenue d'événement.

6. Procédé de commande d'un système de surveillance (1000) comportant au moins un dispositif surveillé (1010) et un dispositif de gestion (1020), l'au moins un dispositif surveillé (1010) pouvant être mis en communication avec un terminal, le procédé comprenant :
la réception d'un signal comportant des informations d'identification pour identifier le terminal existant dans une portée prescrite à partir du dispositif surveillé (1010), en tant que signal reçu depuis le terminal ;
sur la base du signal reçu, l'estimation d'une distance entre l'au moins un dispositif surveillé (1010) et le terminal entant qu'informations de distance de terminal ;
sur la base du signal reçu, l'estimation d'une direction dirigée de l'au moins un dispositif surveillé (1010) au terminal en tant qu'informations de direction de terminal ; et
la capture d'une portée de capture d'image prescrite qui est un voisinage de l'au moins un dispositif surveillé (1010) ;
**caractérisé en ce que** le procédé comprend en outre :
l'analyse d'une vidéo capturée qui a été capturée pour déterminersi oui ou non, un événement prescrit est survenu, et, conjointement à cela, identifier les informations de distance de terminal, les informations de direction de terminal, et les informations d'identification qui sont associées à un moment de capture de la vidéo capturée, et sur la base des informations de distance de terminal, des informations de direction de terminal et des informations d'identification identifiées, déterminer une personne qui est susceptible de provoquerla survenue d'un événement prescrit parmi des utilisateurs de l'au moins un dispositif surveillé (1010) qui ont été attachés au dispositif de gestion (1020) lorsque l'événement prescrit est survenu.

7. Programme qui est exécuté par un ordinateur, le programme amenant un ordinateur à exécuter:
un traitement pour recevoir un signal comportant des informations d'identification pour identifier un terminal existant dans une portée prescrite, en tant que signal reçu depuis le terminal ;
un traitement pour, sur la base du signal reçu, estimer une distance entre au moins un dispositif surveillé (1010) et le terminal en tant qu'informations de distance de terminal ;
un traitement pour, sur la base du signal reçu, estimer une direction dirigée de l'au moins un dispositif surveillé (1010) au terminal en tant qu'informations de direction de terminal ; et
un traitement pour capturer une portée de capture d'image prescrite qui est un voisinage de l'au moins un dispositif surveillé (1010) ;
**caractérisé en ce qu'**il amène l'ordinateur à exécuteren outre :
un traitement pour analyser une vidéo capturée qui a été capturée pour déterminer si oui ou non, un événement prescrit est survenu, et, conjointement à cela, identifier les informations de distance de terminal, les informations de direction de terminal, et les informations d'identification qui sont associées à un moment de capture de la vidéo capturée, et sur la base des informations de distance de terminal, des informations de direction de terminal et des informations d'identification identifiées, déterminerune personne qui est susceptible de provoquer la survenue d'un événement prescrit parmi des utilisateurs de l'au moins un dispositif surveillé (1010) qui ont été attachés à un dispositif de gestion (1020) lorsque l'événement prescrit est survenu.
